(19) **Europäisches Patentamt**

**European Patent Office**

**Office européen des brevets**

(11) **EP 1 110 760 B1**

(12) **EUROPEAN PATENT SPECIFICATION**

(45) Date of publication and mention
of the grant of the patent:
**24.05.2006 Bulletin 2006/21**

(51) Int Cl.:
**B60C 9/28** *(2006.01)*    **B60C 11/04** *(2006.01)*
**B60C 9/20** *(2006.01)*    **B60C 11/00** *(2006.01)*
**B60C 11/03** *(2006.01)*

(21) Application number: **00311332.1**

(22) Date of filing: **18.12.2000**

(54) **Heavy duty tyre**

LKW-LUFTREIFEN

Bandage pneumatique pour poids-lourds

(84) Designated Contracting States:
**DE FR GB**

(30) Priority: **17.12.1999 JP 35953399**

(43) Date of publication of application:
**27.06.2001 Bulletin 2001/26**

(73) Proprietor: **Sumitomo Rubber Industries, Ltd.
Kobe-shi,
Hyogo-ken (JP)**

(72) Inventors:
• **Tuda, Satoshi
Kobe-shi,
Hyogo-ken (JP)**

• **Hashimoto, Tomohiro
Kobe-shi,
Hyogo-ken (JP)**

(74) Representative: **Manitz, Finsterwald & Partner
GbR
Postfach 31 02 20
80102 München (DE)**

(56) References cited:
**EP-A- 0 280 442       EP-A- 0 309 134**

**Description**

Background of the Invention

The present invention relates to a heavy duty tyre with improved wear resistance.

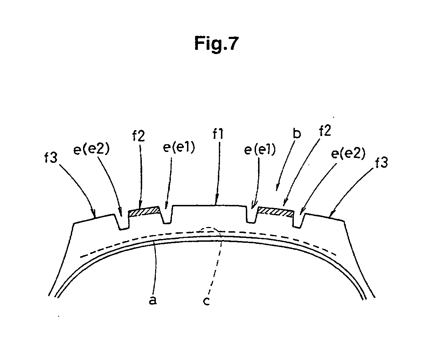

A heavy duty tyre which is used on a truck, a bus or the like, for example as shown in Fig. 7, comprises a toroidal carcass "a", and a belt layer c made of steel cords and disposed radially outside the carcass "a" in a tread portion b. The tread portion b is provided with four main grooves e extending continuously in the circumferential direction of the tyre. The main grooves e comprise a pair of axially inner main grooves e1 arranged in each side of a tyre equator and an axially outer main grooves e2 arranged axially outwards of each of the inner main grooves e1. The main grooves e divide the tread surface into a first land portion f1, a pair of second land portions f2 and a pair of third land portions f3. Each land portion f1, f2 and f3 is formed of a plurality of blocks which provide a high traction force even on a snow-covered road.

However, in such a tread portion b provided with four main grooves e, there is a problem in that there is easily generated so-called rib punching where that the second land portions f2 wear one stage earlier than the first land portion f1 and the third land portions f3.

A tyre according to the preamble of claim 1 is disclosed in EP 0 309 134.

Summary of the Invention

The present invention is made taking into consideration the problems peculiar to such a heavy duty tyre provided with four main grooves, and an object of the present invention is to provide a heavy duty tyre construction which controls the ground pressure of each of land portion in an optimum manner and effectively prevents rib punching or the like so as to improve wear resistance on the basis of controlling the arrangement position of each of the main grooves and the edge of an outmost belt ply in a belt layer and the like with relation to each other.

According to one aspect of the present invention, a heavy duty tyre comprising a carcass extending between bead portions, and a belt layer disposed radially outside the carcass in a tread portion, said belt layer comprising a radially outmost ply and a radially inner widest ply having a belt maximum width BW in a range of from 85 to 105 % of a tread width, said tread portion provided with a pair of axially inner main grooves and a pair of axially outer main grooves, each extending continuously in the circumferential direction of the tyre, characterised in that the axially inner main grooves are each disposed on one side of the tyre equator so that groove centre lines thereof are positioned symmetrically about the tyre equator, and an axial distance L2 from the tyre equator to each said groove centre line is in a range of from 14 to 20 % a half of said belt maximum width BW, the axially outer main grooves each being disposed axially outside of one of the axially inner main grooves so that groove centre lines thereof are positioned symmetrically about the tyre equator, and an axial distance L1 from the tyre equator to each said groove centre line is in a range of from 61 to 69 % a half of said belt maximum width BW, and an axial distance L3 from the tyre equator to each edge of said radially outmost ply is smaller than said axial distance L1 and in a range of from 180 to 270 % of said axial distance L2.

Here, the tread width TW is an axial width between the tread edges, that is, the axial outermost edges of the ground contacting region of the tyre under a standard loaded condition. The standard loaded condition is that when the tyre is mounted on a standard rim and inflated to a standard pressure, and then loaded with a standard load. The standard rim is the "standard rim" specified in JATMA, the "Measuring Rim" in ETRTO, the "Design Rim" in T&RA or the like. The standard pressure is the "maximum air pressure" in JATMA, the "Inflation Pressure" in ETRTO, the maximum pressure given in the "Tyre Load Limits at Various Cold Inflation Pressures" table in T&RA or the like. The standard load is the "maximum load capacity" in JATMA, the "Load Capacity" in ETRTO, the maximum value given in the above-mentioned table in T&RA or the like.

The widths of the outmost ply and the distances L1, L2 and L3 are measured under the standard unloaded condition with the tyre mounted on a standard rim and inflated to a standard pressure, but loaded with no tyre load.

Brief Description of the Drawings

Fig. 1 is a part cross sectional view of a tyre in accordance with an embodiment of the present invention;
Fig. 2 is a developed plan view showing a tread pattern thereof;

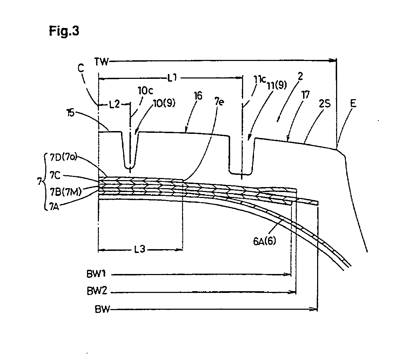

Fig. 3 is a partly enlarged cross sectional view of a tread portion;
Figs. 4A to 4C are schematic views of a ground contacting shape;
Fig. 5 is a graph showing a relation between a ground pressure ratio and a distance L2;
Fig. 6 is a graph showing a relation between a ground pressure ratio and a distance L3; and

Fig. 7 is a expansion view showing a tread pattern of a conventional tyre for a heavy duty tyre.

Description of the Preferred Embodiments

Description of the preferred invention will now be described in detail by way of example only in conjunction with the accompanying drawings.

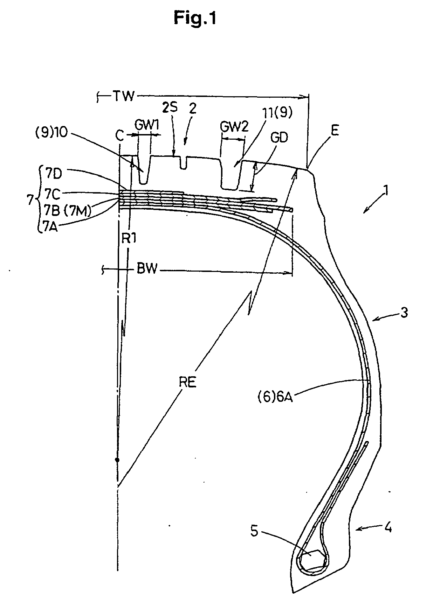

Fig. 1 is a part cross sectional view of a heavy duty tyre 1 (hereinafter, in some cases, refer simply to as "a tyre") having a tyre size of 11R22.5 in accordance with the present embodiment. The tyre 1 comprises a carcass 6 extending between the bead portions 4, and a belt layer 7 disposed radially outside the carcass 6 in the tread portion 2 and having a plurality of belt plies 7A,7B,7C and 7D overlapping inward and outward in the tyre radial direction.

The carcass 6 is composed of at least one ply of a radial or semi-radial structure in which steel cords or organic fibres, e.g. nylon, rayon, polyester, aromatic polyamide and the like are laid at an inclination angle in the range of from 70 to 90 degrees with respect to the tyre equator C. In this embodiment, it is composed of a single ply 6A with a pair of turnup portions each turned up around one bead core 5 from the axially inside to the outside of the tyre and composed of steel cords inclined at an angle of 90 degrees with respect to the tyre equator C.

In this embodiment, the belt layer 7 comprises four plies of steel cords, in which the radially innermost ply 7A is composed of steel cords laid in parallel with each other at an angle of 60 degrees plus or minus 10 degrees with respect to the tyre equator C, and each of the remaining plies 7B, 7C and 7D is composed of steel cords laid in parallel with each other at an angle of not more than 30 degrees with respect to the tyre equator C. The cords in each ply are crosswise to those of the next ply. Further, in this embodiment the inner belt ply 7B arranged radially inside the outmost ply 7D is the widest ply 7M having a belt maximum width BW.

The width of the widest ply 7M, that is, the belt maximum width BW is in a range of from 85 to 105 % of the tread width TW. When the belt maximum width BW is less than 85 % of the tread width TW, the rigidity in the edge regions of the tread becomes insufficient and shoulder wear or the like is easily generated, and on the contrary, when it becomes over 105 %, the edge of the belt layer 7 is very close to the buttress surface of the tyre and cracking, an uneven wear or the like results.

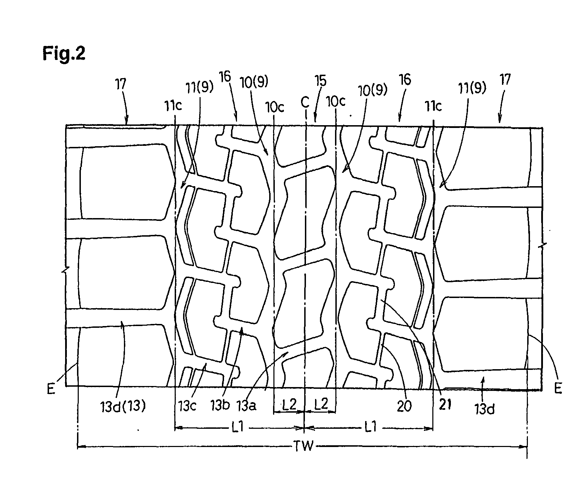

The tread portion 2 is provided with four main grooves 9 each extending continuously in the circumferential direction of the tyre. The main grooves 9 comprise a pair of axially inner main grooves 10 and a pair of axially outer main grooves 11. The inner main grooves 10 are each disposed on one side of the tyre equator C so that the groove centre lines 10c thereof are positioned symmetrically about the tyre equator C as shown in Fig.2. The outer main grooves 11 are each also disposed on one side of the tyre equator C so that the groove centre lines 11c thereof are positioned symmetrically about the tyre equator C as shown in Fig.2.

In this embodiment, each of the main grooves 10 and 11 is formed in a zigzag shape along the circumferential direction of the tyre, however, various kinds of shapes such as a straight shape or a sine curve shape can be used.

Further, in the tread portion 2, in accordance with the present embodiment, is formed a first land portion 15 between the inner main grooves 10, a pair of second land portions 16 between the inner main grooves 10 and the outer main grooves 11, and a pair of third land portion 17 between the outer main grooves 11 and the tread edges E, respectively. In accordance with the present embodiment, at least one axial groove 13 is formed in each of the first to third land portions 15, 16 and 17.

In this embodiment, the axial grooves 13 comprise, for example, first axial grooves 13a extending between the inner main grooves 10, second axial grooves 13b extending from the inner main grooves 10 to axially outside of the tyre and intermittently finishing without being connected with the outer main groove 11, a third axial grooves 13c extending from the outer main grooves 11 to axially inside of the tyre and intermittently finishing without being connected with the inner main grooves 10, and a fourth axial grooves 13d extending between the outer main grooves 11 and the tread edges E. In this case, the second and third axial grooves 13b and 13c are connected by a narrow groove 20 and a wide groove 21 mutually each extending in the circumferential direction of the tyre. Accordingly, the tyre in accordance with the present embodiment is shown in which both of the first land portion 15 and the third land portions 17 each are formed as a plurality of blocks and the second land portions 16 is formed in a rib-like shape substantially connected via the narrow grooves 20 and the wide grooves 21.

Groove widths GW1 and GW2, groove depth GD of the main grooves 9 (all as shown in Fig. 1) can be variously set as occasion demands. For example, the groove widths GW1 and GW2 of the main grooves 9 are preferably set to widths equal to or more than 2 % the tread width TW, more preferably set to be equal to or more than 3 % thereof, and at least set to be equal to or more than 6 mm. Further, the groove depth GD of the main groove 9 is, for example, desirably set to 5 to 12 % the tread width TW. In this case, the groove width of each of the axial grooves 13 is desirably set to, for example, to be equal to or more than 2 % the tread width TW, and the groove depth of the axial groove 13 is desirably set to be, for example, 2 to 12 % the tread width TW.

Further, in this embodiment, in cross-section the tread surface 2S is formed by connecting a plurality of arcs obtained with gradually reducing radii of curvature to the axially outside of the tyre. Thus the tread surface 2S may be formed by a central arc passing through the tyre equator C having a radius of curvature R1 (shown in Fig. 1) of about 800 to 1200 mm, a pair of axially outer arcs passing through the tread edges E and having a radius of curvature RE of about 300 to 400 mm, and a plurality of middle arcs connecting between the centre arc and the outer arc. The middle arcs comprise, for example, three to seven kinds of arcs which gradually reduce in radius of curvature to the axially outside of the tyre.

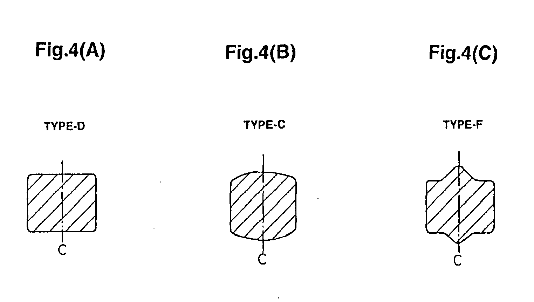

In this case, in accordance with various kinds of experiments by the inventors of the present application, on investigation of the ground contact shape of a tyre in which rib punching of the second land portion 16 is easily generated, it is known that the ground contact shape is formed in a distorted shape that a crown portion largely protrudes in forward and backward the circumferential direction of the tyre (hereinafter, this kind of ground contact shape is sometimes called as a "type-F"), as shown in Fig. 4C in an exaggerated manner. The type-F ground contact shape results from the ground pressure of the first land portion 15 being significantly greater than the ground pressure of the third land portion 17 and the fact that the ground pressure of the second land portion 16 is significantly smaller than the ground pressure of the third land portion 17.

Further, among the various kinds of trials, there can be obtained a tyre having a ground contact shape formed in a rectangular shape as shown in Fig. 4A (hereinafter, this kind of ground contact shape is sometimes called as a "type-D"), however, in this tyre, there results so-called centre wear where the first land portion 15 wears earlier. Then, as a result of further performing various kinds of experiments, as shown in Fig. 4B, in a tyre having an oval-shaped ground contact shape in which front and rear edges in the circumferential direction of the tyre protrude outward so as to form a smooth circular arc shape (hereinafter, this kind of ground contact shape is sometimes called as a "type-C"), the ground pressure of each of the land portions 15 to 17 can be balanced and each of the land portions can be worn evenly, so that it is known that the wear resistance can be improved. Then, in accordance with the present invention, in order to obtain the type-C ground contact shape mentioned above, the positions of the inner main grooves 10 and the outer main grooves 11 are arranged to position an edge of the outmost belt ply 7D and the like with respect to the belt maximum width BW or the like, as mentioned below.

Firstly, an axial distance L1 from the tyre equator C to each the groove centre line 11c of the outer main grooves 11 is in a range of from 61 to 69 % a half of said maximum belt width BW, and an axial distance L2 from the tyre equator C to each groove centre line 10c of the inner main grooves 10 is in a range of from 14 to 20 % the half of said maximum belt width BW. Each of the groove centre lines 10c and 11c of the respective main grooves is a straight line passing through the centre of the groove width, however, in the case that the main grooves 10 and 11 are formed in a zigzag shape as in the present embodiment, the groove centre line is set to be a straight line passing through the centre of amplitude of the groove width centre line of the zigzag shape and formed along the circumferential direction of the tyre.

When the distance L1 is less than 61 % the half of the belt maximum width BW, the outer main grooves 11 moves close to the side of tyre equator C, so that the rigidity of the second land portion 16 becomes insufficient and rib punch wear results in the second land portion 16, and there is a tendency that an edge wear is generated in the second land portion side of the land portions 15 and 17 in both sides thereof. On the contrary, when the distance L1 is over 69 % of half of the belt maximum width BW, rigidity of the third land portion 17 becomes insufficient and uneven wear is easily generated in the third land portion 17.

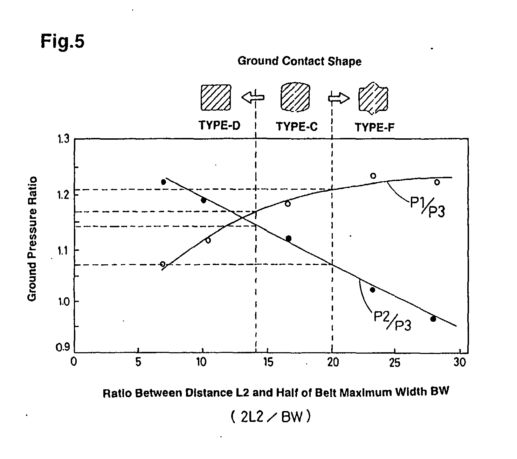

Further, the inventors of the present application manufactured for trial tyres (size 11R22.5) obtained by variously changing the distance L2 and measured the ground pressure P1 of the first land portion 15, the ground pressure P2 of the second land portion 16 and the ground pressure P3 of the third land portion 17, and investigated the ground contact shape. Fig. 5 shows a graph obtained by setting a vertical axis to a ground pressure ratio of (P1/P3) and (P2/P3), a horizontal axis in a lower stage to a ratio (2xL2/BW) between a half of the belt maximum width BW and the distance L2 and a horizontal axis in an upper stage to a ground contact shape. In this case, each of the ground pressures is measured at a ground contact centre position of each of the land portions in the standard loaded condition.

As is apparent from Fig. 5, in order to obtain the type-C ground contact shape, it is necessary to set the distance L2 mentioned above to 14 to 20 % the half width of the belt maximum width BW. If the distance L2 mentioned above becomes less than 14 % the half width of the belt maximum width BW, the ground pressure P1 of the first land portion 15 is relatively reduced and the ground pressure P2 of the second land portion 16 is relatively increased, whereby the ground contact shape becomes close to type-D mentioned above. Accordingly, uneven wear such as centre wear is easily generated in the first land portion 15. Further, when the distance L2 is over 20 % of the half width of the belt maximum width BW, as is inverse to the matter mentioned above, the ground pressure P1 of the first land portion 15 is relatively increased and the ground pressure P2 of the second land portion 16 is relatively reduced, whereby the ground contact shape becomes close to the type-F mentioned above, so that it is impossible to solve the problem that rib punching is generated in the second land portion 16.

As is apparent from Fig. 5, in order to form the ground contact shape of the tyre in the preferable type-C mentioned above, it is desirable that the ground pressure ratio in each of the land portions, that is, the ratio among the ground pressure P1 of the first land portion 15, the ground pressure P2 of the second land portion 16 and the ground pressure P3 of the third land portion 17 satisfies the following conditions:

$$1.17 \leq P1/P3 \leq 1.21$$

and

$$1.07 \leq P2/P3 \leq 1.14.$$

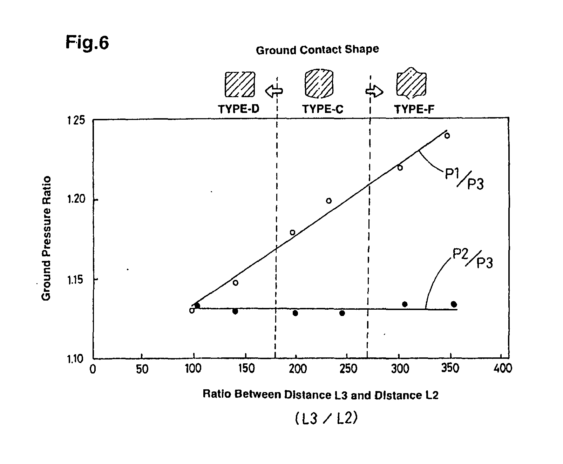

Further, as a result of the experiments by the inventors of the present application, it has been shown that the ground contact shape is changed by changing the position of the edge 7e of the outermost belt ply 7D even in the case of restricting the respective groove centre lines 10c and 11c of the inner main grooves 10 and the outer main grooves 11 to a range mentioned above. Fig. 6 shows a graph obtained by setting the vertical axis to the ground pressure ratio of (P1/P3) and (P2/P3), the horizontal axis in a lower stage to a ratio (L3/L2) between an axial distance L3 and the distance L2 and a horizontal axis in an upper stage to the ground contact shape. Here, the distance L3 is the axial distance from the tyre equator C to each edge 7e of the radially outmost ply 7D. The ground pressure is measured in the same manner as mentioned above.

As is apparent from Fig. 6, it has been known that in the case of fixing the distance L2 and changing the distance L3, the ground pressure ratio (P2/P3) between the third land portion 17 and the second land portion 16 is hardly changed, however, the ground pressure ratio (P1/P3) between the first land portion 15 and the third land portion 17 is increased substantially in proportional to, the distance L3, thereby excessively increasing the ground pressure P1 of the first land portion 15 with respect to the ground pressure P3 of the third land portion 17. Since a level difference of rigidity is generally generated at the position of the edge 7e of the outmost belt ply 7D in the belt layer 7, a bending amount to the inner side in the tyre radial direction is increased in an outer side in the axial direction from the edge 7e. Accordingly, the ground pressure in the side of the tyre centre portion is relatively increased as extending the edge 7e of the outmost belt ply 7D to the outer side in the tyre axial direction.

Further, in accordance with Fig. 6, it has been known that in order to form the ground contact shape of the tyre in the type-C, it is necessary to set the distance L3 mentioned above to 180 to 270 %,for example more preferably 200 to 230 %, of the distance L2 mentioned above. When the distance L3 becomes less than 180 % of the distance L2, the ground pressure P1 of the first land portion 15 is relatively reduced with respect to the ground pressure P3 of the third land portion 17, the ground contact shape is changed closer to the type-D mentioned above and uneven wear occurs such as centre wear. On the contrary, when the distance L3 mentioned above is over 270 % the distance L2, the rigidity of the second land portion 16 is reduced, the ground contact shape becomes close to the type-F mentioned above and rib punching is easily generated in the second land portion 16.

As mentioned above, the heavy duty tyre in accordance with the present invention can control the ground pressure of the land portion in the tyre in an optimum manner and make the ground contact shape close to the type-C which is optimum with respect to wear characteristics, by not only individually restricting the arranged positions of the main grooves 9 in a simple manner but also restricting the positions thereof, the belt maximum width BW of the belt ply, the position of the outer end 7e of the outmost belt ply 7D and the like in such a manner as to apply a relationship to each other. Accordingly, it is possible to improve the wear resistance of the tyre. In this embodiment mentioned above, the structure is made such that both of the first land portion 15 and the third land portion 17 are constituted by blocks, however, the present invention is not limited to the embodiment mentioned above, and the structure can be made such that any one or all of them are constituted by ribs continuously extending in the circumferential direction of the tyre. In this case, the widths BW1 and BW2 of the other plies 7A and 7C in the belt layer 7 are set to be substantially 83 to 95 % of the belt maximum width BW and more preferably are set to 85 to 93 %.

Next, a description will be given of an embodiment obtained by more particularly structuring the present invention.

Heavy duty radial tyres for all seasons having the structure shown in Fig. 1, the basic structure and pattern shown in Fig. 2 and a tyre size of 11R22.5 14PR were manufactured by way of trial experiment on the basis of a specification in Table 1, and the tyres were tested with respect to ground contact shape and wear resistance.

The ground contact shape of each tyre was estimated by mounting the tyres to be tested to a rim having a size of 22.5 x 7.50 with an internal pressure 700 kPa, pressing in to a flat surface with a vertical load 26.72 kN, investigating the outer peripheral contour of the ground contact shape and classifying the result to the closest shape among Figs. 4A to 4C. Further, the wear resistance was observed by mounting each of the tyres to be tested on a rim having a size of 22.5 x 7.50, inflating to an internal pressure of 700 kPa, attaching the assembly as a front wheel on a 2-D/4 fixed load 20 ton vehicle, and inspecting usually the wear condition of the tread surface after the vehicle had run for 20000 km. The results of the tests are shown in Table 1.

Table 1

| | Comparative Example 1 | Embodiment 1 | Comparative Example 2 | Comparative Example 3 | Embodiment 2 | Comparative Example 4 |
|---|---|---|---|---|---|---|
| BW/TW (%) | 97 | | | | | |
| L1/BW (%)<br>L2/BW (%)<br>L3/L2 (%) | 63<br>10<br>200 | 63<br>17<br>200 | 63<br>28<br>200 | 63<br>17<br>100 | 63<br>17<br>230 | 63<br>17<br>350 |
| Ground contact Shape (Fig. 4) | Type-D | Type-C | Type-F | Type-D | Type-C | Type-F |
| Wear Condition | Centre Wear Of First Land Portion | Even Wear | Rib Punching Of Second Land Portion | Centre Wear Of First Land Portion | Even Wear | Rib Punching Of Second Land Portion |

As a result of the tests, all of the tyres in accordance with the embodiment had the type-C ground contact shape and even wear condition, so that a good result was obtained.

As mentioned above, the heavy duty tyre in accordance with the present invention made the ground contact shape of the tyre optimum, resulting in even abrasion of the tread surface with an improved balance and the like by restricting the arranged position of the main groove, the belt maximum width of the belt ply, the outer end position of the outer belt ply and the like with relation to each other, so that it is possible to restrict uneven wear and improve wear resistance.

**Claims**

1. A heavy duty tyre (1) comprising a carcass (6) extending between bead portions (4), and a belt layer (7) disposed radially outside the carcass (6) in a tread portion (2), wherein said belt layer (7) comprises a radially outmost ply (7d) and a radially inner widest ply (7M) having a belt maximum width BW in a range of from 85 to 105 % of a tread width (TW), said tread portion (2) provided with a pair of axially inner main grooves (10) and a pair of axially outer main grooves (11), each extending continuously in the circumferential direction of the tyre, the axially inner main grooves (10) are each disposed on one side of the tyre equator (C) so that groove centre lines (10c) thereof are positioned symmetrically about the tyre equator (C), the axially outer main grooves (11) each disposed on the axially outside of one of the axially inner main grooves (10) so that groove centre lines (11c) thereof are positioned symmetrically about the tyre equator (C), **characterised in that** the axial distance L2 from the tyre equator (C) to each said groove centre line (10c) is in a range of from 14 to 20 % a half of said maximum width BW, and the axial distance L1 from the tyre equator (C) to each said groove centre line (11c) is in a range of from 61 to 69 % a half of said maximum width BW, and the axial distance L3 from the tyre equator (C) to each edge (7e) of said radially outmost ply (7d) is smaller than said axial distance L1 and in a range of from 180 to 270 % of said axial distance L2.

2. A heavy duty tyre according to claim 1, **characterised in that** in a standard loaded condition of the tyre, said tread portion has a ground pressure distribution which satisfies the following conditions:

$$1.17 \leq P1/P3 \leq 1.21$$

and

$$1.07 \leq P2/P3 \leq 1.14$$

wherein P1 is a ground pressure between the axially inner main grooves (10), P2 is a ground pressure between the axially inner main grooves (10) and axially outer main grooves (11), and P3 is a ground pressure between the axially outer main grooves (11) and the tread edges (E).

**Patentansprüche**

1. Schwerlastreifen (1), umfassend eine Karkasse (6), die sich zwischen Wulstabschnitten (4) erstreckt, und eine Gürtelschicht (7), die radial außerhalb der Karkasse (6) in einem Laufflächenabschnitt (2) angeordnet ist, wobei die Gürtelschicht (7) eine radial äußerste Lage (7d) und eine radial innere breiteste Lage (7M) umfasst, die eine maximale Gürtelbreite (BW) in einem Bereich von 85 bis 105% einer Laufflächenbreite (TW) aufweist, wobei der Laufflächenabschnitt (2) mit einem Paar axial inneren Hauptrillen (10) und einem Paar axial äußeren Hauptrillen (11) versehen ist, die sich jeweils kontinuierlich in der Umfangsrichtung des Reifens erstrecken, wobei die axial inneren Hauptrillen (11) jeweils auf einer Seite des Reifenäquators (C) angeordnet sind, so dass Rillenmittellinien (10c) davon symmetrisch um den Reifenäquator (C) herum angeordnet sind, wobei die axial äußeren Hauptrillen (10) jeweils auf der axialen Außenseite von einer der axial inneren Hauptrillen (10) angeordnet sind, so dass Rillenmittellinien (11c) davon symmetrisch um den Reifenäquator (C) herum angeordnet sind, **dadurch gekennzeichnet, dass** der axiale Abstand (L2) von dem Reifenäquator (C) bis zu jeder Rillenmittellinie (10c) in einem Bereich von 14 bis 20% einer Hälfte der maximalen Breite (BW) liegt, und der axiale Abstand (L1) von dem Reifenäquator (C) bis zu jeder Rillenmittellinie (11c) in einem Bereich von 61 bis 69% einer Hälfte der maximalen Breite (BW) liegt, und der axiale Abstand (L3) von dem Reifenäquator (C) bis zu jeder Kante (7e) der radial äußersten Lage (7d) kleiner ist als der axiale Abstand (L1) und in einem Bereich von 180 bis 270% des axialen Abstandes (L2) liegt.

2. Schwerlastreifen nach Anspruch 1, **dadurch gekennzeichnet, dass** in einem normal belasteten Zustand des Reifens der Laufflächenabschnitt eine Bodendruckverteilung aufweist, die die folgenden Bedingungen erfüllt:

$$1{,}17 \leq P1/P3 \leq 1{,}21$$

und

$$1{,}07 \leq P2/P3 \leq 1{,}14$$

wobei P1 ein Bodendruck zwischen den axial inneren Hauptrillen (10) ist, P2 ein Bodendruck zwischen den axial inneren Hauptrillen (10) und den axial äußeren Hauptrillen (11) ist, und P3 ein Bodendruck zwischen den axial äußeren Hauptrillen (11) und den Laufflächenkanten (E) ist.

**Revendications**

1. Pneumatique (1) pour machinerie lourde comprenant une carcasse (6) s'étendant entre des portions (4) de talon, et une couche (7) de ceinture disposée radialement à l'extérieur de la carcasse (6) dans une portion (2) de bande de roulement, dans lequel ladite couche (7) de ceinture comprend un pli (7d) radialement le plus à l'extérieur et un pli interne (7M) radialement le plus large ayant une largeur maximum de ceinture BW dans une gamme de 85 à 105 % d'une largeur de bande de roulement (TW), ladite portion (2) de bande de roulement étant prévue avec une paire de rainures principales internes axialement (10) et une paire de rainures principales externes axialement (11), s'étendant chacune de manière continue dans la direction circonférentielle du pneumatique, les rainures principales internes axialement (10) sont disposées chacune sur un côté de l'équateur (C) du pneumatique de sorte que des lignes centrales (10c) de rainure de ces dernières sont positionnées de manière symétrique sur l'équateur (C) de pneumatique, les rainures principales externes axialement (11) étant disposées chacune sur l'extérieur axialement d'une parmi les rainures principales internes axialement (10) de sorte que des lignes centrales (11c) de rainure de ces dernières sont positionnées de manière symétrique sur l'équateur (C) de pneumatique, **caractérisé en ce que** la distance axiale L2 depuis l'équateur (C) de pneumatique jusqu'à la ligne centrale (10c) de rainure est dans une gamme de 14 à 20 % d'une moitié de ladite largeur maximum BW, et la distance axiale L1 depuis l'équateur (C) de pneumatique jusqu'à chacune desdites lignes centrales (11c) de rainure est dans une gamme de 61 à 69 % d'une moitié de ladite largeur maximum BW, et la distance axiale L3 depuis l'équateur (C) de pneumatique jusqu'à chaque bord (7e) dudit pli (7d) radialement le plus à l'extérieur est plus petite que ladite distance axiale L1 et dans une gamme de 180 à 270 % de ladite distance axiale L2.

**2.** Pneumatique pour machinerie lourde selon la revendication 1, **caractérisé en ce que** dans une condition de chargement normale du pneumatique, ladite portion de bande de roulement a une répartition de pression au sol qui satisfait les conditions suivantes :

$$1,17 \leq P1/P3 \leq 1,21$$

et

$$1,07 \leq P2/P3 \leq 1,14$$

dans lesquelles P1 est une pression au sol entre les rainures principales internes axialement (10), P2 est une pression au sol entre les rainures principales internes axialement (10) et les rainures principales externes axialement (11), et P3 est une pression au sol entre les rainures principales externes axialement (11) et les bords (E) de bande de roulement.

## Fig.1

EP 1 110 760 B1

**Fig.2**

**Fig.3**

**Fig.4(A)**　　**Fig.4(B)**　　**Fig.4(C)**

TYPE-D　　　　TYPE-C　　　　TYPE-F

Fig.5

EP 1 110 760 B1

## Fig.6

**Ground Contact Shape**

TYPE-D  ⇐  TYPE-C  ⇒  TYPE-F

Ground Pressure Ratio (y-axis): 1.10, 1.15, 1.20, 1.25

$P1/P3$

$P2/P3$

Ratio Between Distance L3 and Distance L2

(L3 / L2)

EP 1 110 760 B1

# Fig.7